# EUROPÄISCHE PATENTSCHRIFT

(11) **EP 3 094 585 B1**
(45) Veröffentlichungstag und Bekanntmachung des Hinweises auf die Patenterteilung: **28.11.2018**
(21) Anmeldenummer: 15704220.1
(22) Anmeldetag: 13.01.2015
(51) Int. Cl.: B65G 53/42, B25J 21/02, B65G 65/36, B65G 69/18

(54) **ENTLEERUNGSEINRICHTUNG**
DRAINAGE DEVICE
DISPOSITIF DE VIDAGE

(30) Priorität: 13.01.2014 DE 102014200452
(43) Veröffentlichungstag der Anmeldung: 23.11.2016
(73) Patentinhaber: Hecht Technologie GmbH, 85276 Pfaffenhofen (DE)
(72) Erfinder: HECHT, Günther, 85276 Pfaffenhofen/Ilm (DE)
(74) Vertreter: Kilian Kilian & Partner
(86) Internationale Anmeldenummer: PCT/EP2015/050507
(87) Internationale Veröffentlichungsnummer: WO 2015/104428

(56) Entgegenhaltungen:
- DE-A1- 2 152 782
- US-A- 4 505 077
- US-A- 4 780 927
- US-A- 5 143 102
- US-A- 5 262 578
- US-A- 5 795 626
- US-A1- 2004 040 617
- US-A1- 2007 298 701
- US-A1- 2009 149 689
- US-A1- 2012 315 828

## Beschreibung

Die Erfindung betrifft eine Entleerungseinrichtung zur Entleerung eines ein Produkt enthaltenden Behälters, insbesondere eines Fasses.

Im Stand der Technik werden Behälter, insbesondere Fässer, durch Vorrichtungen entleert, bei denen Sauglanzen durch eine auf dem Fass angeordnete Platte oder einen auf dem Fass angeordneten Isolator hindurchgeführt werden. An der entsprechenden Sauglanze ist eine pneumatische Fördereinrichtung angeschlossen, die das in dem Fass vorhandene Produkt absaugt.

Die hierbei verwendeten Sauglanzen haben in Abhängigkeit von der Höhe der zu entleerenden Fässer eine bestimmten Länge und sind aus einem Metall ausgebildet, weshalb die Sauglanzen von einem Anwender nur unter einem nicht unerheblichen Kraftaufwand bei der Fassentleerung bewegt und gehandhabt werden können.

Aus dem Dokument US 2004/040617 A1, welches eine Entleerungseinrichtung gemäß Oberbegriff des Anspruchs 1 offenbart, ist beispielsweise ein Isolator bekannt, bei dem ein Saugrohr durch eine Öffnung in und aus dem Isolator geführt wird, um ein Fass zu entleeren. Das Saugrohr ist über einen flexiblen Balg mit dem Isolator verbunden.

Weiterhin ist aus dem Dokument US 2009/0149689A1 eine Entleerungseinrichtung gemäß Oberbegriff des Patentanspruches 1 bekannt.

Weiterer Stand der Technik findet sich in US 5262578A, US 4780927A, US 5143102A, US 2007/298701A1, US 2012/315828 A1, DE 2152782 A1, US 4 505 077 A, US 5 795 626 A.

Vor diesem Hintergrund ist es Aufgabe der Erfindung, eine Entleerungseinrichtung zur Entleerung eines ein Produkt enthaltenden Behälters, insbesondere eines Fasses, zu schaffen, die eine leichtere oder zumindest alternative Entleerung eines ein Produkt enthaltenden Behälters ermöglicht.

Diese Aufgabe wird mit einer Entleerungseinrichtung gemäß Anspruch 1 gelöst. Weitere bevorzugte Ausführungsformen sind Gegenstand der Unteransprüche.

Mit der erfindungsgemäßen Entleerungseinrichtung werden insbesondere Behälter entleert, die ein pulver- und/oder granulatförmiges Produkt enthalten, das beispielsweise eine potentielle Gefährdung eines Anwenders darstellt, die Umgebung potentiell verunreinigen würde und/oder einen zu bewahrenden Reinheitsgrad aufweist.

Erfindungsgemäß umfasst eine Entleerungseinrichtung zur Entleerung eines ein Produkt enthaltenden Behälters, insbesondere eines Fasses, eine Isolationseinrichtung, die einen Innenraum festlegt bzw. einen solchen aufweist und Tätigkeiten eines Anwenders in dem Innenraum ohne Kontaminationsgefährdung des Anwenders zulässt.

Eine solche Isolationseinrichtung ist ein Isolator mit Handschuheingriffen, über die der Anwender in dem Innenraum des Isolators Tätigkeiten durchführen kann. Dadurch, dass der Isolator Eingriffe für den Anwender aufweist, kommt dieser nicht direkt mit dem Innenraum des Isolators und damit mit einem in dem Innenraum vorhandenen Produkt in Berührung. Damit wird sichergestellt, dass keine Kontaminationsgefährdung des Anwenders besteht.

Weiterhin umfasst die erfindungsgemäße Entleerungseinrichtung eine Behälteranschlusseinrichtung zum derartigen Anschließen des Behälters an die Isolationseinrichtung, dass keine Kontaminationsgefährdung des Anwenders durch das Produkt besteht.

Bei einer solchen Behälteranschlusseinrichtung kann es sich beispielsweise um einen an einer in die Isolationseinrichtung führenden Öffnung vorgesehenen Ring handeln, an dem Vertiefungen ausgebildet und/oder eine Blähdichtung vorgesehen ist. Die Vertiefungen und/oder die Blähdichtung dienen zur Befestigung eines das Produkt in dem zu entleerenden Behälter umgebenden Foliensackes oder, wenn aus Sicherheitsgründen das Produkt von mehreren Foliensäcken umgeben ist, zur Befestigung aller dieser Foliensäcke.

Die Behälteranschlusseinrichtung ist bevorzugt auf einer Unterseite der Isolationseinrichtung angeordnet, wobei der zu entleerende Behälter bzw. ein Fass beispielsweise durch Anheben an die Behälteranschlusseinrichtung herangeführt werden kann.

Beispielsweise wird bei einem Fass, in dem das Produkt aus Sicherheitsgründen von zwei Foliensäcken umgeben ist, der äußere Foliensack auf der Außenseite des an der Öffnung vorgesehenen Ringes an einer inneren zweier Vertiefungen über einen O-Ring derart befestigt, dass ein Folienrest, der an einer äußeren der zwei Vertiefungen befestigt ist und von einem vorhergehenden Entleerungsvorgang stammt, eingeschlossen wird. Anschließend wird über die Isolationseinrichtung, die Tätigkeiten des Anwenders in ihrem Innenraum ohne Kontaminationsgefährdung des Anwenders zulässt, der Folienrest von der äußeren Vertiefung durch den Innenraum der Isolationseinrichtung hindurch entfernt. Der zweite bislang noch verschlossene und das Produkt in dem Fass umgebende innere Foliensack ist nach Entfernen des Folienrestes über die Isolationseinrichtung zugänglich und kann über die Handschuheinsätze geöffnet werden. Der geöffnete innere Foliensack kann nunmehr beispielsweise über einen Klemmring gelegt und an der Öffnung durch Expansion der Blähdichtung befestigt bzw. fixiert werden.

Das aus dem Fass zu entnehmende Produkt ist hiernach durch den Innenraum der Isolationseinrichtung hindurch zugänglich, wobei, wie erläutert, das Anschließen des Behälters zu keiner Kontaminationsgefährdung des Anwenders durch das Produkt geführt hat.

In Abhängigkeit davon, welche Art von Behälter an die Isolationseinrichtung anzuschließen ist, kann die Behälteranschlusseinrichtung entsprechend ausgebildet sein. Beispielsweise kann die Entleerungseinrichtung so ausgestaltet sein, dass die Behälteranschlusseinrichtung austauschbar ist, insbesondere zur Anpassung an unterschiedliche Fassdurchmesser.

Insbesondere ist die Behälteranschlusseinrichtung zum kontaminationsfreien Anschließen eines Fasses, das einen oder zwei das Produkt in dem Fass umgebende Foliensäcke aufweist, eingerichtet. Zum Anschließen eines Fasses kann die Behälteranschlusseinrichtung bevorzugt eine auf einer Außenseite der Isolationseinrichtung vorgesehene Dichtung aufweisen, gegen die das zu entleerende Fass bzw. dessen oberer Rand gedrückt werden kann.

Weiterhin umfasst die erfindungsgemäße Entleerungseinrichtung eine in dem Innenraum angeordnete Förderleitung, die mit einem Anschlussende an einem in dem Innenraum angeordneten Leitungsanschluss zum Ausleiten des Produktes aus der Isolationseinrichtung befestigt ist, und zur Entleerung des Behälters, insbesondere des Fasses, derart bewegt werden kann, dass sich bei angeschlossenem Behälter ein Förderende der Förderleitung in dem Behälter befindet.

Der Leitungsanschluss kann beispielsweise durch ein Anschlusselement, das in eine Seitenwand der Isolationseinrichtung eingeschweißt ist, ausgebildet sein und von der Seitenwand in den Innenraum vorstehen. An dem Leitungsanschluss wird die Förderleitung beispielsweise durch eine Klemmverbindung, die einen Flansch des Leitungsanschlusses mit einem Flansch der Förderleitung über eine Klammer verbindet, hergestellt. Auf einer Außenseite der Isolationseinrichtung ist ein mit dem Leitungsanschluss in Verbindung stehender Außenanschluss vorgesehen, an dem eine pneumatische Fördereinrichtung befestigt wird. Durch den Leitungsanschluss und den Außenanschluss hindurch kann das Produkt aus der Isolationseinrichtung herausgeleitet werden.

Insbesondere dadurch, dass kein rigides unter Umständen sehr langes und schweres Saugrohr durch eine in der Isolationseinrichtung vorgesehene Öffnung geführt werden muss, sondern sich erfindungsgemäß die Förderleitung von dem in dem Innenraum angeordneten, feststehenden (unbeweglichen bzw. fest verankertem) Leitungsanschluss erstreckt und sich das Förderende in den zu entleerenden Behälter bewegen lässt wird, ist die Förderleitung und damit die Entleerung des Behälters leichter handzuhaben. Allgemein ausgedrückt befinden sich die bewegten Teile in dem Innenraum der Isolationseinrichtung.

Die Entleerung des Behälters ist insgesamt weniger anstrengend.

Bevorzugt ist die Förderleitung durch einen flexiblen Förderschlauch und ein Teleskopsaugrohr ausgebildet.

In dem Fall, dass die Förderleitung ausschließlich aus einem flexiblen Förderschlauch ausgebildet ist, kann der Anwender diesen leicht bzw. dessen Förderende in den Behälter zur Entleerung bzw. zur Entnahme des Produktes bewegen.

In dem anderen nicht erfindungsgemäßen Fall, dass die Förderleitung ausschließlich aus einem Teleskopsaugrohr ausgebildet ist, kann der Anwender das Teleskopsaugrohr ausfahren, damit das Förderende des Teleskopsaugrohres das sich in dem zu entleerenden Behälter befindende Produkt erreicht.

Zur Sicherstellung, dass mit dem Teleskopsaugrohr das gesamte sich in dem Behälter befindende Produkt entnommen werden kann, ist es beispielsweise möglich, die Behälteranschlusseinrichtung so auszugestalten, dass sich der zu entleerende Behälter - im angeschlossenen Zustand - senkrecht zu einer Längsachse des Teleskopsaugrohres bewegen lässt. Diese Bewegung lässt sich bevorzugt durch eine derartige Drehung des Behälters erreichen, dass eine Längsachse des zu entleerenden Behälters/Fasses sich um die Längsachse des Teleskopsaugrohres dreht.

Darüber hinaus kann die Förderleitung aus einer Kombination aus einem flexiblen Förderschlauch und einem Saugrohr/Teleskopsaugrohr ausgebildet sein.

Durch die Verwendung eines flexiblen Förderschlauches wird insbesondere eine Gewichtsreduktion der Förderleitung erzielt.

Bevorzugt ist das Förderende der Förderleitung durch ein Saugrohr oder Teleskopsaugrohr ausgebildet, wobei das Saugrohr oder Teleskopsaugrohr über den flexiblen Förderschlauch an dem Leitungsanschluss befestigt ist.

Hierdurch lässt sich das Saugrohr oder Teleskopsaugrohr leicht in den das Produkt enthaltenden Behälter führen und das Produkt entnehmen.

Die Förderleitung ist in dem Innenraum an einer Aufhängung befestigt, die die Bewegung des Förderendes in den Behälter zulässt und die Förderleitung während der Bewegung haltert.

Hierdurch wird der Anwender, der die Tätigkeit in dem Innenraum der Isolationseinrichtung - nämlich das Bewegen der Förderleitung - beispielsweise über die Handschuheinsätze durchführt, unterstützt, weshalb die Entleerung des Behälters bzw. die Entnahme des Produktes erleichtert wird.

Die Aufhängung weist eine Führungsschiene und einen auf der Führungsschiene verfahrbaren Schlitten auf, wobei die Förderleitung an dem Schlitten derart befestigt ist, dass durch Verfahren des Schlittens das Förderende entweder in den oder aus dem Behälter bewegt wird.

Insbesondere ist hierbei bevorzugt, dass die Führungsschiene geradlinig ist, ergo die Aufhängung eine Linearführung ist. Alternativ kann die Führungsschiene einen bogenförmigen Verlauf haben, derart, dass das Förderende durch Verfahren des Schlittens eine bogenförmige Bewegung beschreibt.

Je nachdem welche Größen die zu entleerenden Behälter/Fässer aufweisen, kann die Förderleitung zur Bewegung des Förderendes in den/aus dem Behälter durch eine Antriebseinheit, wie beispielsweise einen Motor, bewegt/verstellt werden. Hierbei kann die Antriebseinheit beispielsweise eine manuelle Tätigkeit des Anwenders unterstützen oder auch das Bewegen der Förderleitung vollständig übernehmen.

Eine Antriebseinheit, beispielsweise ein Motor, kann insbesondere an dem Schlitten montiert sein, die/der zum Verfahren des Schlittens betätigt werden kann. Die Antriebseinheit/der Motor kann insbesondere so ausgestaltet sein, dass er eine FDA-Zulassung (Food and Drug Administration) und EX-Zulassung (Explosionsschutz-Zulassung) aufweist.

Die Antriebseinheit(en)/die Motor(en), die im Vorhergehenden erwähnt wurden, können beispielsweise pneumatisch betriebene oder elektrisch betriebene Motoren sein.

Bevorzugt ist das Förderende durch ein Saugrohr ausgebildet, das über den flexiblen Förderschlauch an dem Leitungsanschluss befestigt ist. Der Förderschlauch ist mit einem dem Anschlussende entsprechenden Ende an dem Leitungsanschluss und mit einem anderen Ende an dem Schlitten befestigt, wobei das Saugrohr über einen Verbindungsschlauch, der flexibler ist als der Förderschlauch, an dem Schlitten und/oder dem Förderschlauch befestigt ist.

Hierdurch lässt sich die Förderleitung über den Schlitten leicht verfahren und gleichzeitig das Saugrohr aufgrund des sehr flexiblen Verbindungsschlauches innerhalb des zu entleerenden Behälters über den Querschnitt des zu entleerenden Behälter/Fasses bewegen.

Weiterhin bevorzugt kann die Förderleitung einen flexiblen Förderschlauch aufweisen, der mit einem dem Anschlussende entsprechenden Ende an dem Leitungsanschluss befestigt ist. Die Aufhängung kann gemäß einem nicht erfindungsgemäßen Vergleichsbeispiel eine mittels einer Federlagerung gelagerte Rolle sein, über die der Förderschlauch verläuft, wobei die Aufhängung während der Bewegung des Förderendes in den/aus dem Behälter den Förderschlauch durch eine Kombination aus einer Drehung der Rolle und einer Federwirkung der Federlagerung haltert.

Alternativ kann die Aufhängung gemäß einem nicht erfindungsgemäßen Vergleichsbeispiel ein pneumatisch betriebener Zylinder sein, an dem die Förderleitung befestigt ist und der sich pneumatisch betrieben ein-/ausfahren lässt, um das Förderende in den/aus dem Behälter zu bewegen. Bevorzugt ist das Förderende durch ein Saugrohr ausgebildet, das über einen flexiblen Förderschlauch an dem Leitungsanschluss befestigt ist. Insbesondere ist auch in diesem Fall der Förderschlauch mit einem dem Anschlussende entsprechenden Ende an dem Leitungsanschluss und mit einem anderen Ende an dem pneumatisch betriebenen Zylinder befestigt, wobei das Saugrohr über einen Verbindungsschlauch, der flexibler ist als der Förderschlauch, an dem Zylinder und/oder dem Förderschlauch befestigt ist.

Alternativ kann die Aufhängung gemäß einem nicht erfindungsgemäßen Vergleichsbeispiel ein Federzug sein, der die Förderleitung während der Bewegung des Förderendes in den/aus dem Behälter durch eine Federwirkung des Federzuges haltert.

Weiterhin bevorzugt weist die Förderleitung einen flexiblen Förderschlauch auf, der mit einem dem Leitungsanschluss entsprechenden Ende an dem Leitungsanschluss befestigt ist. Die Aufhängung ist gemäß einem nicht erfindungsgemäßen Vergleichsbeispiel bevorzugt ein Kipphebel, über den der Förderschlauch verläuft und der während der Bewegung des Förderendes in den/aus dem Behälter den Förderschlauch durch eine Kipp- bzw. Schwenkbewegung haltert.

Durch die im Vorhergehenden beschriebenen Aufhängungen wird insbesondere eine Gewichtskompensation erreicht, die eine sehr leichte Handhabung der Förderleitung und damit eine sehr leichte Entleerung des Behälters ermöglichen.

Insbesondere ist die Aufhängung bevorzugt derart eingerichtet, dass sie das Förderende auf eine Ausgangsposition zurückstellt, wenn keine Kraft von dem Anwender beispielsweise über die Handschuheinsätze auf die Förderleitung ausgeübt wird. In den oben genannten nicht erfindungsgemäßen Vergleichsbeispielen kann dies beispielsweise durch eine Dimensionierung der Federwirkung der die Rolle lagernden Federlagerung oder des Federzuges erreicht werden.

Bevorzugt ist das Förderende durch ein Teleskopsaugrohr ausgebildet, das in Abhängigkeit von einem Füllstand des Behälters verlängert und/oder verkürzt werden kann. Hierdurch kann die Bauhöhe der erfindungsgemäßen Entleerungseinrichtung verringert werden.

Bevorzugt ist das Förderende durch ein Saugrohr oder Teleskopsaugrohr ausgebildet, wobei das Saugrohr oder Teleskopsaugrohr eine Gaszufuhrleitung aufweist, über die ein Gas an eine Eintrittsöffnung an dem Förderende, durch die hindurch das Produkt in die Förderleitung bestimmungsgemäß eintritt, geleitet werden kann.

Bevorzugt ist die Gaszufuhrleitung durch einen Zwischenraum zwischen einem Außenrohr des Saugrohres und einem in dem Außenrohr verlaufenden Innenrohr des Saugrohres ausgebildet.

Durch die Zuführung des Gases kann in dem Fall einer pneumatischen Förderung bzw. einem Absaugen des aus dem Behälter zu entnehmenden Produktes eine kontinuierliche pneumatische Förderung sichergestellt werden.

Die Entleerungseinrichtung umfasst den bereits erläuterten mit dem Leitungsanschluss in Verbindung stehenden Außenanschluss, an dem bestimmungsgemäß eine pneumatische Fördereinrichtung anschließbar ist und eine Wägeeinrichtung zur Gewichtsbestimmung des Produktes, wobei die Wägeeinrichtung derart angeordnet ist, dass bei bestimmungsgemäßer Verwendung der Entleerungseinrichtung sich die Isolationseinrichtung und der Behälter auf der Wägeeinrichtung befinden.

Vorteilhaft ist insbesondere, dass der Anschluss der pneumatischen Fördereinrichtung über den feststehenden (unbeweglichen, fest verankerten) Außenschluss erfolgt. Das heißt, da kein Saugrohr von außen durch eine in die Isolationseinrichtung führende Öffnung und durch den Innenraum hindurch in den Behälter geführt werden muss, werden keine von außen wirkenden Kräfte (bis auf die vernachlässigbare Gewichtskraft eines von dem Außenanschluss zu der pneumatischen Fördereinrichtung verlaufenden Außenschiauches) auf die Wägeeinrichtung ausgeübt und damit verfälschte Gewichtsbestimmungen vermieden. Die Wägeeinrichtung ermittelt bevorzugt das Gewicht des geförderten bzw. entnommenen Produktes durch Differenzbildung des anfänglich gemessenen Gesamtgewichtes und des nach Entnahme des Produktes gemessenen Gesamtgewichtes.

Weiterhin bevorzugt ist die Wägeeinrichtung derart angeordnet und ausgestaltet, dass bei bestimmungsgemäßer Verwendung der Entleerungseinrichtung sich auch der Anwender auf der Wägeeinrichtung befindet.

Hierdurch wird noch besser verhindert, dass externe Kräfte auf die Wägeeinrichtung während der Entleerung des Behälters bzw. der Entnahme des Produktes wirken und zu einer verfälschten Gewichtsbestimmung führen, weil sich der Anwender selbst auf der Wägeeinrichtung befindet und Tätigkeiten des Anwenders zu keiner Kraftausübung auf die Wägeeinrichtung führen.

Zusätzlich kann eine Erhöhung der Genauigkeit der Gewichtsbestimmung durch das Verhalten des Anwenders selbst erzielt werden. Zieht beispielsweise der Anwender das Förderende der Förderleitung aus dem sich in dem Behälter befindenden Produkt und wartet darauf, bis das sich in der Förderleitung befindende Produkt vollständig durch den Außenanschluss hindurch abgesaugt bzw. gefördert wurde, kann eine sehr genaue Gewichtsbestimmung der entnommenen Produktmenge aus dem anfänglich gemessenen Gesamtgewicht und dem nach der pneumatischen Förderung gemessenen Gesamtgewicht ermittelt werden.

Bevorzugt umfasst die Isolationseinrichtung ein Sichtfenster, durch das der Anwender den Innenraum überblicken kann, wobei die Behälteranschlusseinrichtung derart schräg angeordnet ist, dass der Anwender bei angeschlossenem Behälter/Fass einen Innenraum des Behälters/Fasses durch das Sichtfenster und den Innenraum hindurch vollständig einsehen kann.

Hierdurch wird erreicht, dass zum einen sich das in dem Behälter befindende Produkt an einem Rand im Bodenbereich des Behälters sammelt und zum anderen der Anwender alle sich in dem Behälter befindenden Reste gut sehen kann.

Bevorzugt weist die erfindungsgemäße Entleerungseinrichtung noch eine Vibrationseinheit auf, die eine Vibration des Behälters/Fasses erzeugt. Durch diese Vibration werden an verschiedenen Stellen haftende Reste des zu entnehmenden Produktes gelöst und insbesondere in dem Fall des Schrägstehens des Behälters an einem Rand im Bodenbereich des Behälters gesammelt.

Die Isolationseinrichtung ist bevorzugt aus einem Metall oder einem Kunststoff ausgebildet. Gleiches gilt für das Saugrohr der Förderleitung, wobei dieses allgemein so konstruiert ist, dass es eine für eine pneumatische Förderung notwendige Stabilität aufweist aber ein möglichst geringes Eigengewicht aufweist.

Der flexible Förderschlauch kann beispielsweise aus einem Kunststoff mit einer Spiralverstärkung oder auch aus einem Metall gebildet sein.

Die Isolationseinrichtung ist insbesondere so dimensioniert, dass der Anwender alle Bereiche des Innenraumes, insbesondere die Förderleitung, den Schlitten und das Saugrohr, gut erreichen kann.

Die erfindungsgemäße Entleerungseinrichtung wird insbesondere für die Entleerung von Behältern/Fässer eingesetzt, in denen das Produkt in Form eines Pulvers oder Granulats vorliegt.

Unter Bezug auf die beigefügten Figuren werden nunmehr bevorzugte Ausführungsformen der erfindungsgemäßen Entleerungseinrichtung erläutert.
**Fig. 1** zeigt die erfindungsgemäße Entleerungseinrichtung, wobei ein Anwender sich vor einer Handschuheingriffe aufweisenden Isolationseinrichtung befindet und ein zu entleerendes Fass unterhalb der Isolationseinrichtung und einer Behälteranschlusseinrichtung angeordnet ist.
**Fig. 2** zeigt einen Schnitt der erfindungsgemäßen Entleerungseinrichtung aus Fig. 1, wobei eine Förderleitung sich in ihrer Grundstellung und ein entsprechendes Förderende in seiner Ausgangsposition befindet.
**Fig. 3** zeigt die in Fig. 2 gezeigte erfindungsgemäße Entleerungseinrichtung, wobei die Förderleitung bzw. das entsprechende Förderende sich in seinem maximal in das zu entleerende Fass verfahrbaren Zustand befindet.
**Fig. 4** zeigt die Entleerungseinrichtung, wobei schematisch zwei alternative, nicht erfindungsgemäße Aufhängungen für die Förderleitung gezeigt sind.
**Fig. 5** zeigt eine weitere Variante einer in dem Innenraum der Isolationseinrichtung angeordneten Förderleitung.
**Fig. 6** zeigt die erfindungsgemäße Entleerungseinrichtung aus Fig. 5, wobei das in Fig. 5 gezeigte Teleskopsaugrohr sich in seinem maximal ausgefahrenen Zustand befindet und in das zu entleerende Fass bewegt ist.
**Fig. 7** zeigt eine bevorzugte Ausgestaltung eines Saugrohres, das bei der erfindungsgemäßen Entleerungseinrichtung Anwendung finden kann.
**Fig. 8** zeigt eine bevorzugte Ausgestaltung einer Isolationseinrichtung der erfindungsgemäßen Entleerungseinrichtung, wobei eine Seite der Isolationseinrichtung, an der sich die Behälteranschlusseinrichtung befindet, derart schräg verläuft, dass ein Anwender den Innenraum des zu entleerenden Fasses vollständig einsehen kann.
**Fig. 9** zeigt die Entleerungseinrichtung aus Fig. 8, bei der eine weitere bevorzugte alternative, nicht erfindungsgemäße Aufhängung der Förderleitung gezeigt ist.
**Fig. 10** zeigt die erfindungsgemäße Entleerungseinrichtung aus Fig. 9, bei der sich die gesamte erfindungsgemäße Entleerungseinrichtung zusammen mit dem Anwender auf einer Wägeeinrichtung befindet.
**Fig. 11** zeigt eine bevorzugte Abwandlung der Wägeeinrichtung, wobei diese mit der aus Fig. 9 bis auf den Unterschied, dass sich der Anwender nicht auf der Wägeeinrichtung befindet, identisch ist.

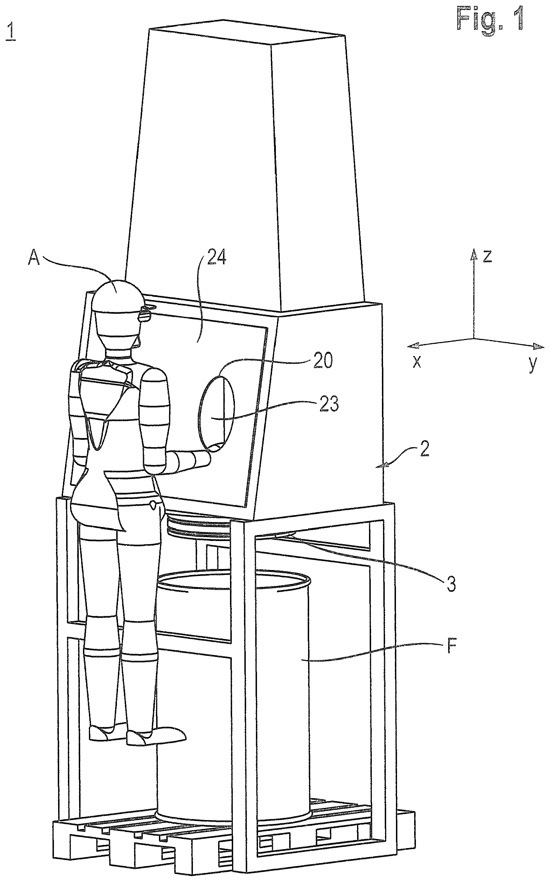

In Fig. 1 ist eine erfindungsgemäße Entleerungseinrichtung 1 gezeigt, vor der sich ein Anwender befindet und unter der ein zu entleerendes Fass F angeordnet ist. Das Fass F enthält beispielsweise pulver- und/oder granulatförmige Stoffe, die bei Freisetzung eine potentielle Gefährdung für den Anwender und die Umwelt darstellen. Aus diesem Grund ist es notwendig, dass dieses Produkt dem Fass F kontaminationsfrei entnommen wird.

Hierfür umfasst die erfindungsgemäße Entleerungseinrichtung 1 eine Isolationseinrichtung 2 und eine Behälteranschlusseinrichtung 3 zum Anschließen des Fasses F.

Die Isolationseinrichtung 2 ist aus einem Isolator ausgebildet, der zwei Öffnungen 20 mit daran befestigten Handschuheingriffen (nicht gezeigt) aufweist. Der Anwender A kann durch die Öffnungen 20 hindurch seine Arme und Hände in die Handschuheingriffe einführen und gefahrlos Tätigkeiten in einem Innenraum 23 der Isolationseinrichtung 2 bzw. des Isolators durchführen.

Bevorzugt weist die Isolationseinrichtung 2 ein Sichtfenster 24 auf, damit der Anwender A seine Tätigkeiten in dem Innenraum beobachten kann.

Das zu entleerende Fass F befindet sich in dem in Fig. 1 gezeigten Zustand unterhalb der Isolationseinrichtung 2, damit es an eine auf der Unterseite der Isolationseinrichtung 2 angeordnete Behälteranschlusseinrichtung 3 angeschlossen werden kann.

Bei potentiell eine Gefährdung darstellenden Produkten sind bevorzugt ein oder zwei Foliensäcke innerhalb des Fasses F vorgesehen, die beide das Produkt umgeben und jeweils separat verschlossen sind.

Wie im Folgenden noch erläutert werden wird, können die oberen Enden dieser beiden Foliensäcke an der Behälteranschlusseinrichtung 3 so befestigt werden, dass keine Gefährdung des Anwenders durch das Produkt besteht.

Die in Fig. 1 gezeigte X-Richtung entspricht der Tiefenrichtung der Isolationseinrichtung, die gezeigte Y-Richtung der Breitenrichtung der Isolationseinrichtung 2 und die Z-Richtung der Höhenrichtung der erfindungsgemäßen Entleerungseinrichtung 1. Die Dimensionen der Isolationseinrichtung in X- und Y-Richtung sind bevorzugt so gewählt, dass der Anwender A alle Elemente, insbesondere eine sich in dem Innenraum 23 befindende Förderleitung, gut erreichen kann.

Wie in Fig. 1 gezeigt, ist die Behälteranschlusseinrichtung 3 in Höhenrichtung gesehen auf einer Unterseite der Isolationseinrichtung 2 angeordnet, so dass das zu entleerende Fass F durch Anheben in die Nähe bzw. an die Behälteranschlusseinrichtung 3 gebracht werden kann.

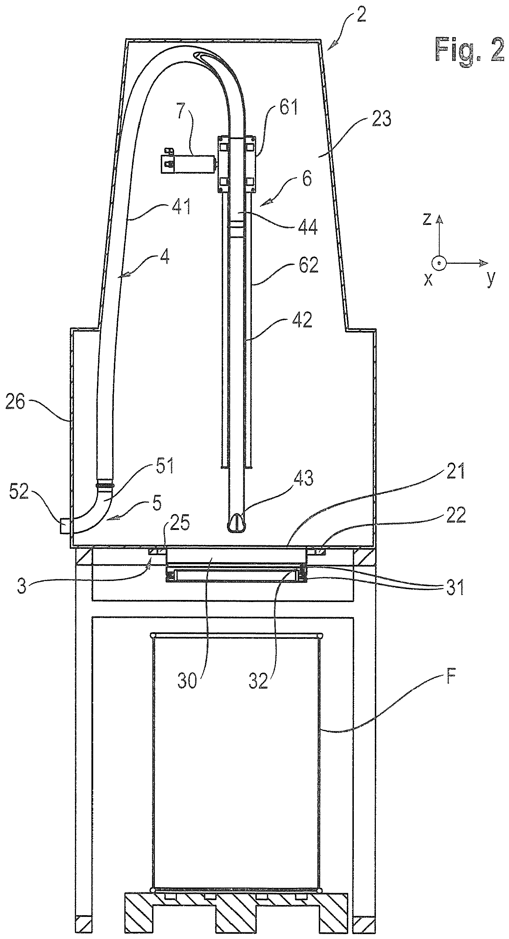

Fig. 2 zeigt eine Schnittansicht der in Fig. 1 gezeigten erfindungsgemäßen Entleerungseinrichtung 1, wobei der Schnitt auf ungefähr halber Tiefe der Isolationseinrichtung 2 in Y-Richtung erfolgte. Folglich entspricht die in Fig. 2 gezeigte Ansicht der Y-Z-Ebene und zeigt den Innenraum 23 aus Sicht des Anwenders A.

Auf der Unterseite der Isolationseinrichtung 2 ist die erwähnte Behälteranschlusseinrichtung 3 gezeigt. Die Behälteranschlusseinrichtung 3 ist aus einem Ring 30 ausgebildet, der eine in die Isolationseinrichtung 2 führende Durchgangsöffnung 21 umläuft, wobei auf einer Außenseite des Ringes 30 zwei den Ring 30 vollständig umlaufende Vertiefungen 31 vorgesehen sind. Auf einer Innenseite des Ringes 30 ist eine Blähdichtung 32 vorgesehen, über die ein Klemmring fixiert bzw. festgelegt werden kann.

Das Anschließen des Fasses F wird im Folgenden erläutert.

Wird das zu entleerende Fass F unterhalb der Isolationseinrichtung 2 angeordnet, öffnet der Anwender in einem ersten Schritt einen Deckel des Fasses F und befestigt ein oberes Ende eines sich in dem Fass F befindenden Foliensackes an der inneren der Unterseite der Isolationseinrichtung 2 zugewandten Vertiefung 31, wobei ein nicht gezeigter Folienrest, der an der äußeren der beiden Vertiefungen 31 befestigt ist und von einem vorhergehenden Entleerungsvorgang stammt, eingeschlossen wird. Die Befestigung erfolgt bevorzugt mittels eines O-Ringes. Der an der inneren der Vertiefungen 31 befestigte Foliensack kann von dem Anwender nunmehr von außen durch Entfernen eines entsprechenden Verschlusses geöffnet werden. Sollte das Produkt, das sich in dem Fass F befindet, von einem zusätzlichen sich in dem Foliensack befindenden inneren Foliensack umgeben sein, kann der an der inneren der beiden Vertiefungen 31 befestigte Foliensack bereits vor seiner Befestigung geöffnet werden.

Der an der äußeren der Vertiefungen 31 befestigte Folienrest wird von dem Anwender mittels der Handschuheinsätze von der Behälteranschlusseinrichtung gelöst und innerhalb der Isolationseinrichtung entsorgt, beispielsweise in einen an der Isolationseinrichtung 2 angebrachten Abfallsack.

Der an der inneren der Vertiefungen 31 befestigte Foliensack wird anschließend bevorzugt auf die äußere der Vertiefungen 31 versetzt.

Durch Betätigen einer Hubvorrichtung wird in diesem Zustand das zu entleerende Fass F angehoben und an eine sich auf der Unterseite der Isolationseinrichtung 2 befindende Dichtung 22 gedrückt.

Sollte, wie bereits erwähnt, das sich in dem Fass F befindende Produkt von einem weiteren verschlossenen inneren Foliensack umgeben sein, muss der innere Foliensack vor der Entleerung geöffnet werden. Dies erfolgt dadurch, dass der Anwender durch die in der Isolationseinrichtung 2 vorgesehenen Öffnungen 20 in die Handschuheinsätze eingreift und über diese den Verschluss des zweiten inneren Foliensackes durch die Öffnung 21 hindurch öffnet. Das obere Ende des inneren Foliensackes wird über den bereits erwähnten Klemmring gelegt und über eine auf der Innenseite des Ringes vorgesehene Blähdichtung 32 fixiert.

Zwischen dem Ring 30 der Behälteranschlusseinrichtung 3 und der Dichtung 22 befindet sich noch ein Vakuumanschluss 25, durch den bei angehobenem und an die Dichtung 22 gedrücktem Fass F die Luft zwischen dem äußeren Foliensack und der Innenwand des Fasses F abgesaugt wird, damit der Foliensack/die Foliensäcke in dem Fass F an der Innenwand anliegen und bei der im Folgenden erläuterten pneumatischen Förderung/Absaugung des Produktes nicht angesaugt werden können.

Das Fass F befindet sich nunmehr in einem Zustand, in dem es entleert werden kann.

Wie in Fig. 2 gezeigt ist, befindet sich in dem Innenraum 23 der Isolationseinrichtung 2 eine Förderleitung 4, die einen flexiblen Förderschlauch 41 und ein steifes Saugrohr 42 aufweist.

In einer Seitenwand 24 der Isolationseinrichtung 2 ist ein Anschlusselement 5 vorgesehen, das einen in dem Innenraum 23 angeordneten Leitungsanschluss 51 und einen auf der Außenseite der Isolationseinrichtung 2 angeordneten Außenanschluss 52 aufweist. Das Anschlusselement ist beispielsweise in die Seitenwand 26 der Isolationseinrichtung 2 eingeschweißt und zwar derart, dass der Leitungsanschluss 51 sich unbeweglich (fest verankert, feststehend) in dem Innenraum 23 der Isolationseinrichtung 2 und der Außenanschluss 52 sich unbeweglich (fest verankert, feststehend) auf der Außenseite der Isolationseinrichtung 2 befindet.

Das Anschlusselement 5 kann alternativ auf andere Weise an der Seitenwand 26 der Isolationseinrichtung 2 befestigt werden. Beispiele hierfür sind kraftschlüssige, stoffschlüssige und formschlüssige Befestigungen, die eine dichte Befestigung des Anschlusselementes 5 an der Seitenwand 26 sicherstellen.

An dem sich in dem Innenraum 23 befindenden Leitungsanschluss 51 ist der flexible Förderschlauch 41 der Förderleitung 4 befestigt und verläuft in Höhenrichtung zu einem oberen Bereich der Isolationseinrichtung 2, wo er bogenförmig verläuft und mit seinem anderen Ende an dem Saugrohr 42 befestigt ist. Das Saugrohr 42 verläuft in Richtung der Öffnung 21 und endet kurz vor der Öffnung 21. An seinem in Höhenrichtung unteren Ende weist das Saugrohr ein Förderende 43 mit einer Eintrittsöffnung auf. Die Förderleitung 4 befindet sich in der in Fig. 2 gezeigten Stellung in ihrer Ausgangsstellung bzw. befindet sich das Förderende 43 in seiner Ausgangsposition.

Die Förderleitung 4 ist auf Höhe der Verbindung zwischen dem flexiblen Förderschlauch 41 und dem Saugrohr 42 an einem Schlitten 61 einer als Führung ausgebildeten Aufhängung 6 befestigt. Der Schlitten 61 greift mit einer Schiene 62 ineinander und ist auf der Schiene 62 verfahrbar. Die Schiene 62 verläuft in Höhenrichtung geradlinig, wodurch das Saugrohr 42 der Förderleitung 4 in Höhenrichtung durch die Öffnung 21 hindurch abgesenkt und das Förderende 43 mit dem sich in den Fass F befindenden Produkt in Berührung gebracht werden kann.

Aufgrund der Flexibilität des Förderschlauches 41 lässt der Förderschlauch 41 diese Bewegung bzw. das Absenken des Saugrohres 42 zu und geht folgt der Bewegung, wobei das dem Leitungsanschluss entsprechende Ende des flexiblen Förderschlauches 41 an dem Leitungsanschluss 51 unbeweglich und feststehend befestigt ist.

Das heißt alle sich bewegenden Teile befinden sich in dem Innenraum 23 der Isolationseinrichtung 2.

Zur Unterstützung der Handhabung der Förderleitung 41 durch den Anwender ist an dem Schlitten 61 noch ein beispielsweise elektrisch oder pneumatisch betriebener Motor 7 angeordnet, der über die Handschuheinsätze in den Öffnungen 20 der Isolationseinrichtung 2 für den Anwender erreichbar ist. Der Anwender kann den Motor 7 sowohl zum Absenken als auch Anheben der Förderleitung 4 betätigen. Mit anderen Worten kann der Anwender über den Motor 7 den Schlitten 61 auf der Schiene 62 in beide Richtungen (positive z-Richtung und negative z-Richtung) verfahren.

Auf der Außenseite der Seitenwand 26 ist der bereits erwähnte Außenanschluss 52 vorgesehen, an dem eine nicht gezeigte pneumatische Fördereinrichtung beispielsweise über einen Schlauch befestigt werden kann. Die pneumatische Fördereinrichtung erzeugt durch den Außenanschluss 52 und den Leitungsanschluss 51 hindurch in der Förderleitung 4 einen Unterdruck, der zu einer Gasströmung aus dem Innenraum 23 durch die Förderleitung 4 und das Anschlusselement 5 hindurch in Richtung der pneumatischen Fördereinrichtung führt.

Zum Ausgleich eines sich in dem Innenraum 23 bildenden Unterdruckes können (nicht gezeigte) Filterelemente, die eine Gasströmung in den Innenraum 23 zulassen, an der Isolationseinrichtung 2 vorgesehen sein.

Wird nunmehr bei laufender pneumatischer Fördereinrichtung der Motor 7 von einem Anwender betätigt, derart, dass der Schlitten 61 sich in negativer z-Richtung auf der Schiene 62 bewegt, kommt das Saugrohr 42 mit seinem dem Fass F zugewandten Förderende 43 in die Nähe bzw. Berührung mit dem Produkt. Aufgrund des durch die pneumatische Fördereinrichtung erzeugten Unterdruckes wird das sich in dem Fass F befindende Produkt angesaugt und tritt durch die an dem Förderende 43 vorhandene Öffnung in die Förderleitung 4 ein. Das Produkt strömt durch die Förderleitung 4 zu dem Anschlusselement 5, wo es durch den Leitungsanschluss 51 und den Außenanschluss 52 hindurch aus der Isolationseinrichtung 2 herausgeleitet und in den zu der Fördereinrichtung verlaufenden Schlauch eintritt.

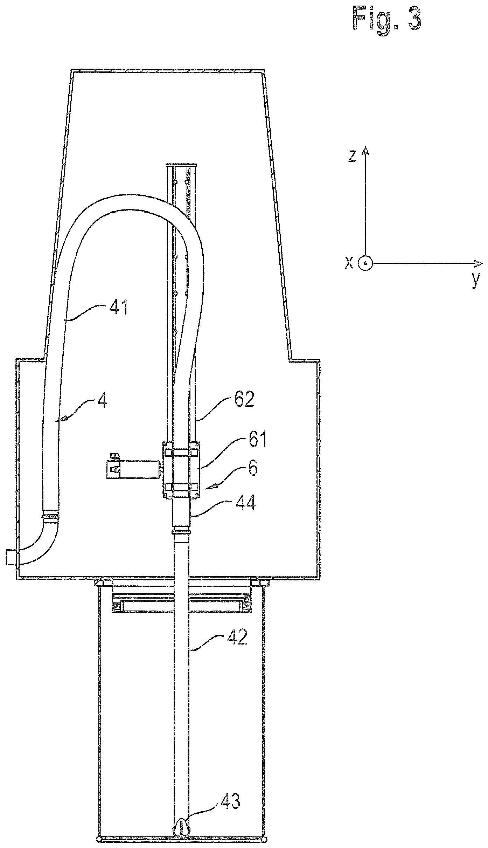

In Abhängigkeit von der Füllhöhe des Fasses F und der Saugleistung der pneumatischen Fördereinrichtung senkt der Anwender A das Saugrohr 42 durch Betätigung des Motors 7 so lange ab, bis das Fass F entleert ist. Der Zustand, in dem das Saugrohr 42 bzw. das Förderende 43 den Boden des Fasses F erreicht hat bzw. der Schlitten 61 auf der Schiene 62 maximal verfahren ist, ist in Fig. 3 gezeigt.

Bevorzugt ist der Förderschlauch 41 in der in Fig. 2 und 3 gezeigten Variante der Förderleitung 4 über einen sehr flexiblen Verbindungsschlauch 44 mit dem Saugrohr 42 mittelbar verbunden. Der Verbindungsschlauch ist einerseits an dem Schlitten 61 mit dem Förderschlauch 41 verbunden und andererseits an dem Saugrohr befestigt.

Insbesondere ist der flexible Verbindungsschlauch 44 aus einem Material ausgebildet, das flexibler ist als der durch die Aufhängung 6 geführte Förderschlauch 41. Der sehr flexible Verbindungsschlauch 44 befindet sich insbesondere zwischen Saugrohr 42 und Schlitten 61. Der sehr flexible Verbindungsschlauch 44 stellt sicher, dass das Saugrohr 42 mit geringem Kraftaufwand über den gesamten Fassquerschnitt (x-y-Ebene) bewegt werden kann.

Insbesondere der Motor 7 ist in dieser Variante der Förderleitung bzw. deren Aufhängung 6 nur ein bevorzugtes Merkmal. Der Schlitten

61 könnte auch lediglich manuell auf der Schiene verfahren werden, oder eine zusätzliche Federeinrichtung kann vorgesehen sein, die das manuelle Verfahren des Schlittens 61 auf der Schiene 62 unterstützt.

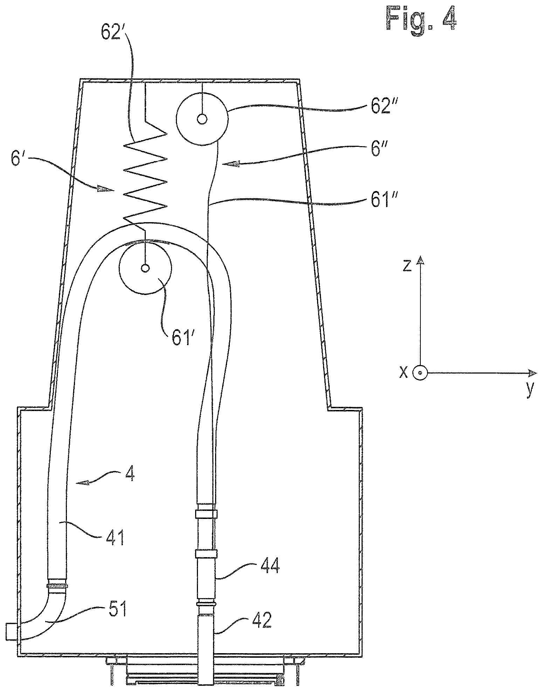

Fig. 4 zeigt gleichzeitig zwei alternative, nicht beanspruchte Aufhängungen zu der unter Bezug auf Fig. 2 und 3 erläuterten.

Wie aus Fig. 4 ersichtlich ist, ist der Förderschlauch 41 wiederum einerseits mit einem Ende an dem Leitungsanschluss 51 und andererseits an dem Saugrohr 42 befestigt. Der Verbindungsschlauch 41 verläuft zwischen dem Leitungsanschluss 51 und dem Saugrohr 42 über eine Rolle 61' einer ersten alternativen Aufhängung 6'. Die Rolle 61' ist selbst über eine Federlagerung 62' an einer Oberseite der Isolationseinrichtung 2 befestigt.

Greift der Anwender über die Handschuheinsätze die Förderleitung 4, um das Förderende 43 des Saugrohres 42 in das zu entleerende Fass F zu verfahren, dreht sich die Rolle 61' in Fig. 4 im Uhrzeigersinn, wobei gleichzeitig die Federlagerung 62' gespannt wird. Lässt der Anwender nach Entleerung des Fasses F die Förderleitung 4 los, bewirkt die Rückstellkraft der Federung 62', dass das Saugrohr 42 aus dem Fass F herausgezogen und in seine Ausgangsposition zurückgeführt wird. Hierbei dreht sich die Rolle 61' entgegen dem Uhrzeigersinn. Bei der in Fig. 4 gezeigten Variante der Förderleitung kann an der Verbindung zwischen dem Saugrohr 42 und der Förderleitung 41 ebenfalls der sehr flexible Verbindungsschlauch 44 vorgesehen sein, der es ermöglicht, dass der Anwender beispielsweise mit einer Hand die Förderleitung 4 an der Verbindung zwischen Förderschlauch 41 und flexiblem Verbindungsschlauch 44 hält und mit der anderen Hand das Saugrohr 42 über den Querschnitt des Fasses F zum Absaugen des Produktes bewegt.

Fig. 4 zeigt eine weitere alternative Aufhängung 6" zur Halterung der Förderleitung 4 in dem Innenraum 23. Die Aufhängungen 6' und 6" können entweder einzeln oder in Kombination in dem Innenraum 23 vorhanden sein.

Die Aufhängung 6" ist ein Federzug, der ein an der Förderleitung 4 befestigtes Drahtseil 61" aufweist, das auf eine Wickelrolle 62" aufgerollt oder von dieser abgerollt wird. Greift der Anwender durch die Handschuheinsätze die Förderleitung 4, beispielsweise an der Verbindung zwischen Förderschlauch 41 und sehr flexiblem Verbindungsschlauch 44, und übt hierüber eine Kraft auf die Förderleitung 4 zum Absenken des Förderendes 43 des Saugrohres 42 aus, wird das Drahtseil 61" von der Wickelrolle 62" abgerollt, wobei zeitgleich eine durch die Wickelrolle 62" erzeugte Rückstellkraft auftritt. Lässt der Anwender die Förderleitung 4 nach Entleerung des Fasses F los, wird das Saugrohr 42 zurück in seine Ausgangsstellung bzw. das Förderende 43 in seine Ausgangsposition zurückgestellt.

Insbesondere sorgen die in Fig. 4 gezeigten Aufhängungen für eine Gewichtskompensation.

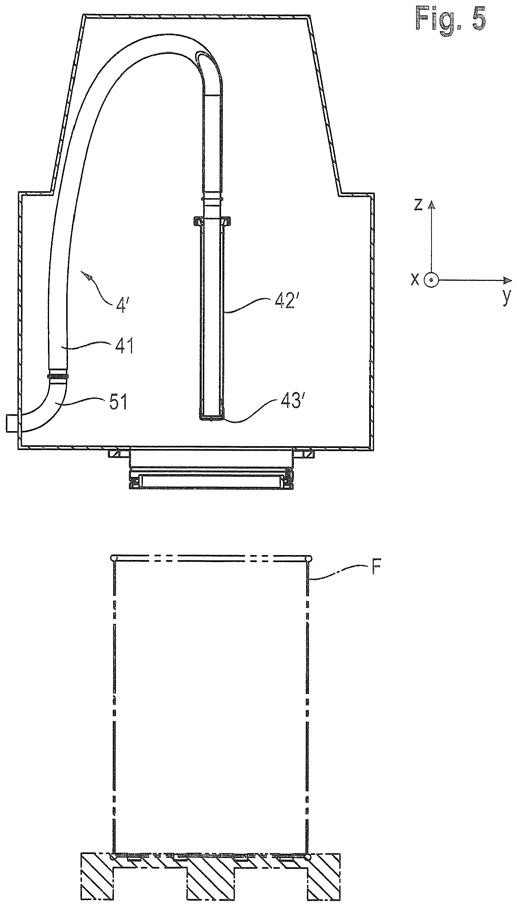

Fig. 5 zeigt eine weitere Variante einer in der Isolationseinrichtung 2 angeordneten Förderleitung 4', wobei diese wiederum einen flexiblen Förderschlauch 41 aufweist, der mit seinem einen Ende an dem Leitungsanschluss 51 und mit seinem anderen Ende an einem ausfahrbaren Teleskopsaugrohr befestigt ist. In dieser Variante der Förderleitung 4 sind keine Aufhängungen gezeigt, es können allerdings alle im Vorhergehenden erläuterten Aufhängungen auch hier eingesetzt werden.

Insbesondere eignet sich diese Variante allerdings zur reinen manuellen Absaugung des Produktes aus dem angeschlossenen Fass F.

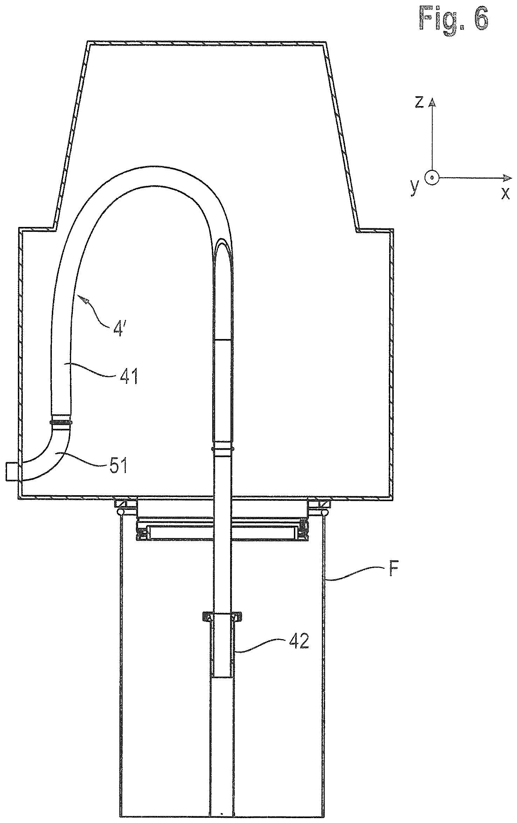

Das Teleskopsaugrohr kann aufgrund seiner flexiblen Länge durch einen Anwender, der durch die Handschuheinsätze in dem Innenraum seine Tätigkeit durchführt, sehr leicht gehandhabt werden. In Abhängigkeit von der Füllhöhe des zu entleerenden Fasses F stellt der Anwender eine bestimmte Länge des Teleskopsaugrohres 42' ein und beginnt anschließend das Förderende 43' des Teleskopsaugrohres 42' in das angeschlossene Fass F einzuführen und das darin enthaltene Produkt abzusaugen. Der Anwender verlängert das Teleskopsaugrohr 42' je nach Bedarf mit abnehmender Füllhöhe des zu entleerenden Fasses F, bis letztendlich das Teleskopsaugrohr 42' eine Länge erreicht, die eine vollständige Entleerung des Fasses F ermöglicht. Der Zustand, in dem das Teleskopsaugrohr 42' eine für die vollständige Entleerung des Fasses F notwendige Länge aufweist, ist in Fig. 6 gezeigt. Das Teleskopsaugrohr 42' kann bevorzugt 2, 3 oder auch mehrere Teilrohre zur Verlängerung des gesamten Teleskopsaugrohres 42' aufweisen.

Insbesondere vorteilhaft an dem Teleskopsaugrohr 42' ist, dass die Höhe der Isolationseinrichtung 2 in z-Richtung gegenüber der in Fig. 1 bis 4 gezeigten Isolationseinrichtung 2 vermindert werden kann.

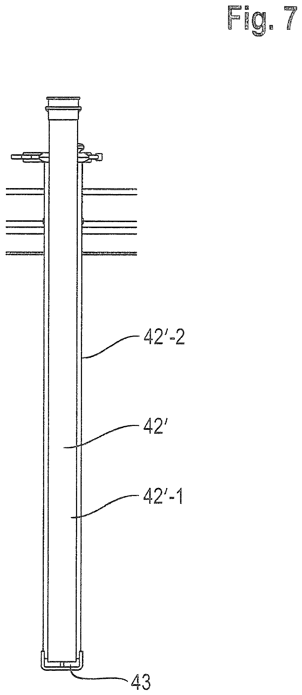

Eine bevorzugte Variante eines mit dem flexiblen Förderschlauch 41 zu verbindenden Saugrohres 42' ist in Fig. 7 gezeigt. Dieses Saugrohr 42' umfasst ein Innenrohr 42'-1 und ein Außenrohr 42'-2, wobei das Innenrohr 42'-1 durch das Außenrohr 42'-2 hindurch verläuft. Ein Zwischenraum zwischen dem Außenrohr 42'-2 und dem Innenrohr 42'-1 fungiert als Gaszufuhrleitung, über die ein Gas zu der Eintrittsöffnung an dem Förderende 43 des Saugrohres 42' geleitet werden kann. Das an dem Förderende 43 aus der Gaszufuhrleitung austretende Gas wird zusammen mit dem zu fördernden Produkt durch die sich am Förderende befindende Eintrittsöffnung hindurch in das Innenrohr 42'-1 abgesaugt. Das zugeführte Gas ist insbesondere für eine kontinuierliche Förderung vorteilhaft.

Das in Fig. 7 gezeigte Saugrohr 42' wird insbesondere bei der in Fig. 1 bis 4 gezeigten erfindungsgemäßen Entleerungseinrichtung 1 eingesetzt.

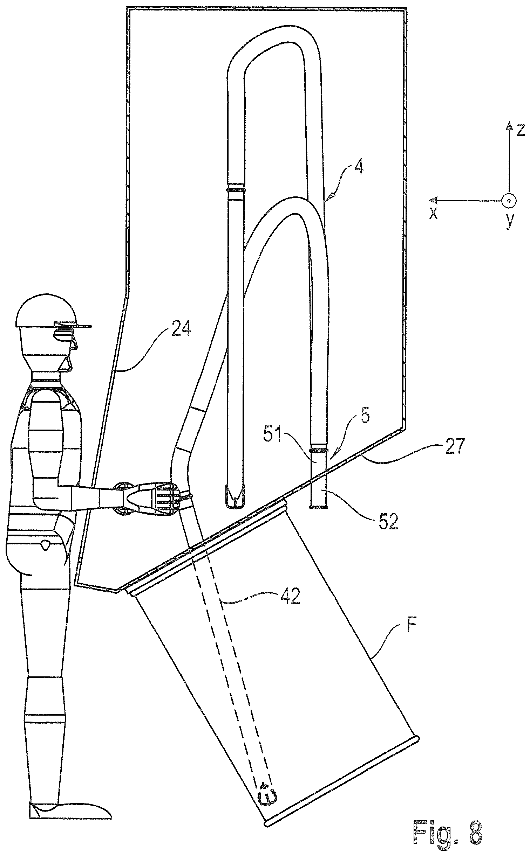

Fig. 8 zeigt die erfindungsgemäße Entleerungseinrichtung 1, wobei die Isolationseinrichtung 2 bevorzugt abgewandelt ist. Die Unterseite 27 der Isolationseinrichtung 2 ist nicht wie in den Fig. 1 bis 7 gezeigt horizontal ausgebildet, sondern verläuft in der in Fig. 8 gezeigten x-z-Ebene derart schräg, dass ein Anwender durch das an der Isolationseinrichtung 2 vorgesehene Fenster 24 das zu entleerende Fass F vollständig einsehen kann. Anders ausgedrückt ist die Behälteranschlusseinrichtung derart angeordnet, dass ein bestimmungsgemäß an ihr angeschlossenes Fass F in Richtung des Fensters 24 bzw. der Handschuheinsätze verkippt ist. Dies hat insbesondere den Vorteil, dass sich das in dem Fass F befindende Produkt an einem unteren Rand des Bodenbereiches des Fasses F sammelt und hier durch den Anwender gut mittels des Saugrohres 42 abgesaugt werden kann.

Die Förderleitung 4 kann eine der unter Bezug auf Fig. 1 bis 7 erläuterten Ausgestaltungen aufweisen. Lediglich das Anschlusselement 5 ist in der in Fig. 8 gezeigten Variante der Förderleitung 4 so ausgebildet, dass der Leitungsanschluss 51 und der Außenanschluss 52 zusammen in Höhenrichtung geradlinig verlaufen, und nicht wie in den Fig. 1 bis 7 der Leitungsanschluss 51 in dem Innenraum gebogen ist.

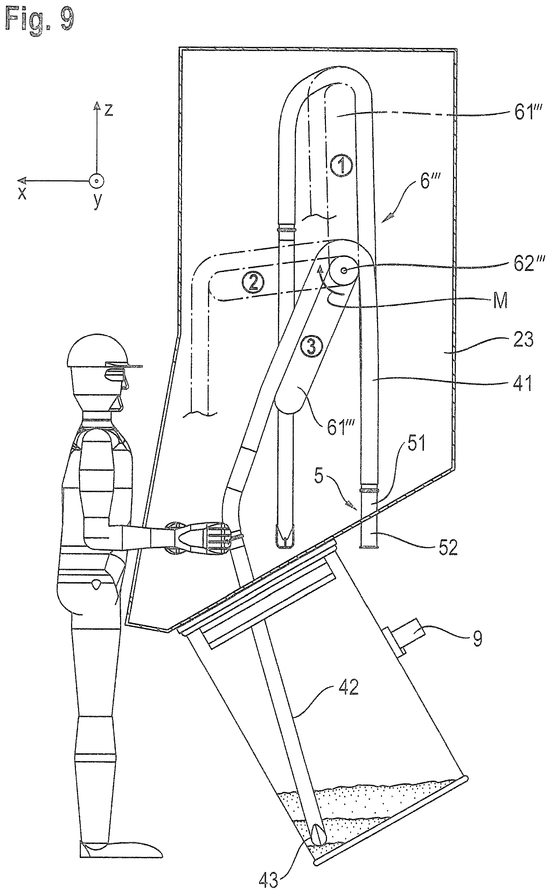

Fig. 9 zeigt die in Fig. 8 gezeigte erfindungsgemäßen Entleerungseinrichtung 1, wobei die Förderleitung 4 durch eine bevorzugte alternative, nicht beanspruchte Aufhängung 6''' in dem Innenraum 23 der Isolationseinrichtung 2 gehaltert wird. Die Aufhängung 6''' umfasst einen Kipphebel 61"', der um eine Schwenkachse 62''', die in Y-Richtung bzw. Breitenrichtung verläuft, geschwenkt werden kann, wobei durch Schwenken des Kipphebels 61''' ein Rückstellmoment um die Schwenkachse 62''' auftritt. In dem in Fig. 9 gezeigten Zustand hat der Anwender das Fass F fast vollständig entleert. Lässt der Anwender A die Förderleitung in diesem Zustand los, bewirkt das Rückstellmoment, dass die Förderleitung bzw. das Förderende 43 in seine Ausgangsposition zurückkehrt bzw. zurückgeführt wird.

Die Schwenkachse 62''' des Kipphebels 61''' befindet sich an einem Ende des Kipphebels 61''' und, wie erwähnt, verläuft die Schwenkachse in Y-Richtung. D.h. der Kipphebel 61''' schwenkt in der X-Z-Ebene. In der ersten Stellung des Kipphebels 61''' befinden sich die Förderleitung 4 und das Förderende 43 in der entsprechenden Ausgangsstellung. Zieht der Anwender an der Förderleitung 4 bewegt sich der Kipphebel 61''' in die zweite Stellung. Wie ersichtlich ist, nimmt aufgrund der Lage der Schwenkachse die Hebelwirkung des Kipphebels 61''' bis zur zweiten Stellung zu, weshalb in dieser Stellung der notwendige Kraftaufwand des Anwenders am geringsten ist. Bewegt der Anwender das Saugrohr 42 weiter in das zu entleerende Fass F, geht der Kipphebel 61''' in die dritte Stellung über.

Der flexible Förderschlauch 41 verläuft wie in Fig. 9 gezeigt über den Kipphebel 61''' und ist einerseits an dem Leitungsanschluss 51 und andererseits an dem Saugrohr 42 befestigt. Die Förderleitung 4 kann je nach Bedarf wie unter Fig. 2 bis 8 beschrieben ausgestaltet sein.

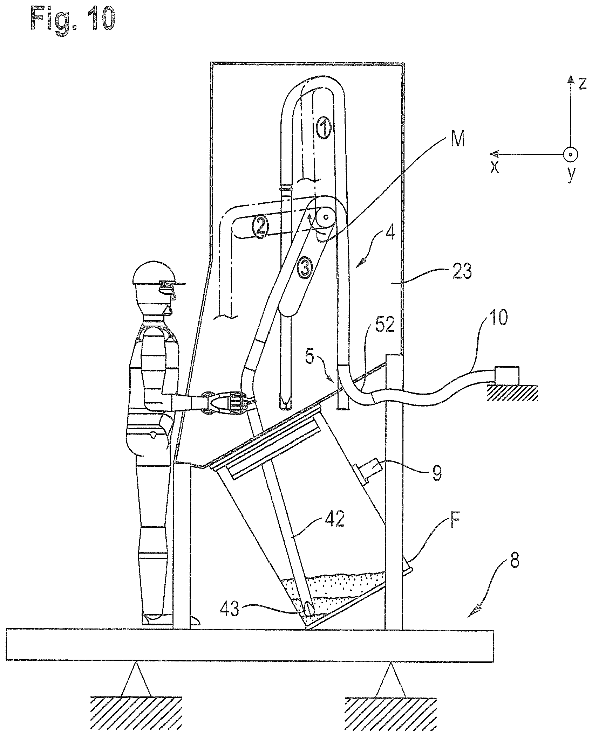

Zusätzlich kann, wie aus Fig. 10 ersichtlich ist, eine Wägeeinrichtung 8 vorgesehen sein, auf der die erfindungsgemäße Entleerungseinrichtung 1 zusammen mit dem Anwender angeordnet ist. Das Verbindungselement 5 ist wie auch bei den vorhergehenden Ausgestaltungen der Isolationseinrichtung 2 fest verankert und unbeweglich an der Isolationseinrichtung 2 befestigt.

Ein zu der pneumatischen Fördereinrichtung verlaufender Außenschlauch 10 ist an dem Außenanschluss 52 des Anschlusselementes 5 befestigt, wobei an dieser Stelle zu erwähnen ist, dass der Außenschlauch 10 zwischen dem Anschlusselement 5 und der pneumatischen Fördereinrichtung bei bestimmungsgemäßer Verwendung der Entleerungseinrichtung 1 unbewegt ist, da der Außenanschluss 52 unbeweglich und feststehend ist. Das heißt über diesen Schlauch werden keine Kräfte bis auf die vernachlässigbare Gewichtskraft des Außenschlauches 10 selbst auf die erfindungsgemäße Entleerungseinrichtung 1 und damit auf die Wägeeinrichtung 8 übertragen. Dieser Krafteinwirkung kann dadurch begegnet werden, dass die Wägeeinrichtung 8 nach dem Anschluss des Außenschlauches 10 und vor der anfänglichen Gewichtsbestimmung kalibriert wird.

Da der Anwender selbst sich auch auf der Wägeeinrichtung 8 befindet, werden während der Entleerung keine externen Kräfte durch den Anwender selbst auf die Entleerungseinrichtung 1 bzw. Wägeeinrichtung 8 übertragen, weshalb gute und zuverlässige Gewichtsbestimmungen über die Wägeeinrichtung 8 erhalten werden.

Die Gewichtsbestimmung kann darüber hinaus durch das Verhalten des Anwenders selbst noch weiter verbessert werden. Saugt beispielsweise der Anwender einen gewissen Teil des sich in dem Fass F befindenden Produktes ab und zieht anschließend das Förderende 43 aus dem Produkt heraus, wartet der Anwender A bis sich die in dem Innenraum 23 befindende Förderleitung 4 entleert hat, damit das Produkt in der Förderleitung 4 die Gewichtsbestimmung nicht verfälscht. Das Gewicht des bis zu diesem Zeitpunkt dem Fass F entnommenen Produktes kann gut ermittelt werden, indem das anfängliche Gesamtgewicht mit dem nunmehr vorliegenden Gesamtgewicht verglichen wird.

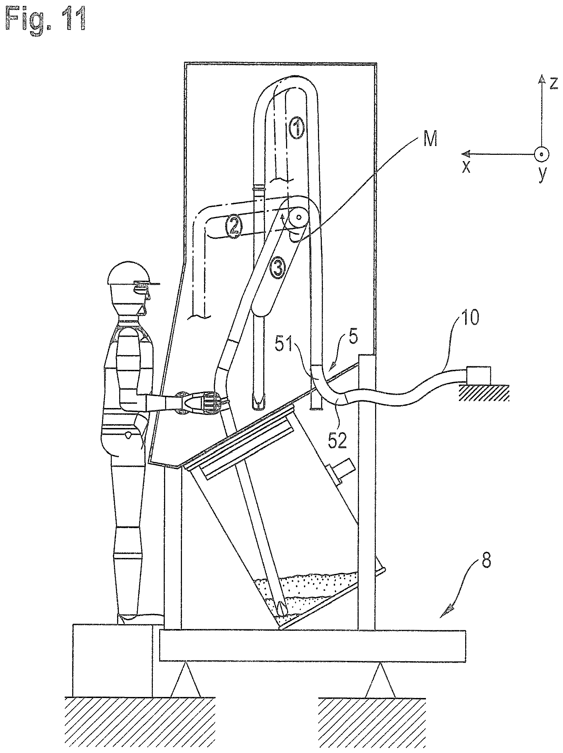

Fig. 11 zeigt eine Variante der in Fig. 10 gezeigten Wägeeinrichtung 8. Der einzige Unterschied ist, dass der Anwender sich in der in Fig. 11 gezeigten Variante nicht auf der Wägeeinrichtung 8 sondern auf einem gesondert für den Anwender vorgesehen Podest befindet. Bei dieser Variante sollte der Anwender das Anfangsgewicht zu einem Zeitpunkt ermitteln, zu dem er die Arme nicht in den Handschuheinsätzen hat. Dies deshalb, damit jegliche Krafteinwirkung auf die Wägeeinrichtung 8 durch den Anwender selbst vermieden wird.

Nach Bestimmung des Anfangsgewichtes greift der Anwender über die Handschuheinsätze die Förderleitung in dem Innenraum und saugt eine bestimmte Menge des sich in dem Fass F befindenden Produktes ab. Anschließend überführt er die Förderleitung 4 in ihre Ausgangsstellung, in der das Förderende 43 sich nicht in dem zu entleerenden Fass F befindet, zieht die Arme aus den Handschuheinsätzen heraus und ermittelt nach vollständigem Entleeren der Förderleitung 4 das gegenwärtige Gewicht der gesamten Entleerungseinrichtung 1. Durch Vergleich mit dem ursprünglichen/anfänglichen Gesamtgewicht kann wiederum das Gewicht der entnommenen Menge des Produktes ermittelt werden.

Wie in Fig. 9 und 10 gezeigt ist, kann beispielsweise an dem Fass F selbst eine Vibrationseinrichtung 9 angebracht werden, die das Fass F in Schwingung versetzt, damit sich das in dem Fass F befindende Produkt an dem unteren Rand des Fasses F sammelt.

## Patentansprüche

1. Entleerungseinrichtung (1) zur Entleerung eines ein Produkt enthaltenden Behälters, insbesondere eines Fasses (F), weiche aufweist:
eine Isolationseinrichtung (2), die einen Innenraum (23) festlegt und Tätigkeiten eines Anwenders in dem Innenraum (23) ohne Kontaminationsgefährdung des Anwenders zulässt, wobei die Isolationseinrichtung ein Isolator mit Handschuheingriffen ist, über die der Anwender in dem Innenraum Tätigkeiten durchführen kann;
eine Behälteranschlusseinrichtung (3) zum derartigen dichtenden Anschließen des Behälters an die Isolationseinrichtung (2), dass keine Kontaminationsgefährdung des Anwenders durch das Produkt besteht; und
eine in dem Innenraum (23) angeordnete Förderleitung (14), die zur Entleerung des Behälters derart bewegt werden kann, dass sich bei angeschlossenem Behälter ein Förderende (43) der Förderleitung (4) in dem Behälter befindet,
**dadurch gekennzeichnet, dass**
die Förderleitung (14) mit einem Anschlussende an einem in dem Innenraum (23) angeordneten Leitungsanschluss (51) zum Ausleiten des Produktes aus der Isolationseinrichtung (2) befestigt ist, wobei
die Förderleitung aus einem flexiblen Förderschlauch (41) ausgebildet ist, der an dem Leitungsanschluss befestigt ist, wobei der Leitungsanschluss für das Ausleiten des Produktes mit einem Außenanschluss (52) der Entleerungseinrichtung in Verbindung steht, an dem eine pneumatische Fördereinrichtung angeschlossen ist;
die Förderleitung (4) in dem Innenraum (23) an einer Aufhängung gehaltert ist, die die Bewegung des Förderendes (43) in den Behälter zulässt und die Förderleitung (4) während der Bewegung der Förderleitung (4) haltert;
die Aufhängung eine Führungsschiene und einen auf der Führungsschiene verfahrbaren Schlitten (61) aufweist, und die Förderleitung (4) an dem Schlitten derart befestigt ist, dass durch Verfahren des Schlittens das Förderende (43) entweder in den oder aus dem Behälter bewegt wird.

2. Entleerungseinrichtung (1) gemäß Anspruch 1, wobei das Förderende (43) der Förderleitung (4) durch ein Saugrohr (42) oder Teleskopsaugrohr ausgebildet ist, das über den flexiblen Förderschlauch (41) an dem Leitungsanschluss (51) befestigt ist.

3. Entleerungseinrichtung (1) gemäß Anspruch 1 oder 2, wobei die Führungsschiene geradlinig ist.

4. Entleerungseinrichtung (1) gemäß einem der Ansprüche 1 bis 3, wobei die Förderleitung (4) durch einen Motor bewegt werden kann.

5. Entleerungseinrichtung (1) gemäß Anspruch 4 , wobei der Motor an dem Schlitten vorgesehen ist, der zum Verfahren des Schlittens betätigt werden kann.

6. Entleerungseinrichtung (1) gemäß einem der Ansprüche 2 bis 5, wobei der Förderschlauch (41) mit einem dem Anschlussende entsprechenden Ende an dem Leitungsanschluss (51) und mit einem anderen Ende an dem Schlitten (61) befestigt ist; und
das Saugrohr oder Teleskopsaugrohr über einen Verbindungsschlauch (44), der flexibler ist als der Förderschlauch, an dem Schlitten und/oder dem Förderschlauch befestigt ist.

7. Entleerungseinrichtung (1) gemäß einem der Ansprüche 1 bis 6, wobei die Aufhängung derart eingerichtet ist, dass sie das Förderende (43) auf eine Ausgangsposition zurückstellt, wenn keine Kraft auf die Förderleitung (4) ausgeübt wird.

8. Entleerungseinrichtung (1) gemäß einem der vorhergehenden Ansprüche 1 bis 7, wobei die Entleerungseinrichtung (1) eine Wägeeinrichtung zur Gewichtsbestimmung des Produktes aufweist, wobei die Wägeeinrichtung derart angeordnet ist, dass sich bei bestimmungsgemäßer Verwendung der Entleerungseinrichtung (1) die Isolationseinrichtung (2) und der Behälter und bevorzugt auch der Anwender auf der Wägeeinrichtung befinden.

9. Entleerungseinrichtung (1) gemäß einem der vorhergehenden Ansprüche 1 bis 8, wobei die Isolationseinrichtung (2) ein Sichtfenster aufweist, durch das der Anwender den Innenraum (23) überblicken kann und die Behälteranschlusseinrichtung (3)derart schräg angeordnet ist, dass der Anwender bei angeschlossenem Behälter einen Innenraum (23) des Behälters durch das Sichtfenster und den Innenraum (23) hindurch vollständig einsehen kann.

## Claims

1. Emptying device (1) for emptying a container, in particular a barrel (F), containing a product, comprising:
an isolation device (2), which defines an inner space (23) and allows activities of a user in the inner space (23) without risk of contamination of the user, wherein the isolation device is an isolator with glove ports by means of which the user can carry out activities in the inner space;
a container connection device (3) for connecting the container in a sealing manner to the isolation device (2) in such a way that the user is not at risk of contamination by the product; and
arranged in the inner space (23) a conveyor pipe (14), which to empty the container can be moved in such a way that when the container is connected one conveyor end (43) of the conveyor pipe (4) is located in the container
**characterised in that**
the conveyor pipe (14) is fastened with one connection end (14) to a pipe connection (51) arranged in the inner space (23) for conveying the product out of the isolation device (2), wherein
the conveyor pipe is designed in the form of a flexible hose (41) which is connected to the pipe connection, wherein the pipe connection for removing the product is connected to an external connection (52) of the emptying device, to which a pneumatic conveying device is connected;
in the inner space (23) the conveying pipeline (4) is held on a suspension device which allows movement of the conveying end (43) into the container and supports the conveying pipe (4) during the movement of the conveying pipe (4);
the suspension device comprises a guide rail and a sled (61) that is displaceable on the guide rail, and the conveyor pipe (4) is connected to the sled in such a way that through displacement of the sled the conveyor end (43) is either moved into or out of the container.

2. Emptying device (1) according to claim 1, wherein the conveyor end (43) of the conveyor pipe (4) is formed by a suction pipe (42) or a telescopic pipe which is connected by way of the flexible conveyor hose (41) to the pipe connection (51).

3. Emptying device (1) according to claim 1 or 2 wherein the guide rail is straight.

4. Emptying device (1) according to any one of claims 1 to 3 wherein the conveyor pipe (4) can be moved by a motor.

5. Emptying device (1) according to claim 4 wherein the motor is provided on the sled and can be operated to move the sled.

6. Emptying device (1) according to any one of claims 2 to 5 wherein the conveyor hose (41) is connected to one pipe connection (51) with one end corresponding to the connection end and with the other end to the sled (61); und
the suction pipe or telescopic pipe is fastened to the sled and/or the conveyor pipe by means of a connection hose (44) which is more flexible than the conveyor hose.

7. Emptying device (1) according to any one of claims 1 to 6 wherein the suspension device is set up in such a way that it returns the conveyor end (43) to an initial position when no force is exerted on the conveyor pipe (4).

8. Emptying device (1) according to any one of preceding claims 1 to 7 wherein the emptying device (1) comprises a weighing device for determining the weight of the product, wherein the weighing device is arranged in such a way that when the emptying device (1) is being correctly used the isolation device (2) and the container and preferably also the user are located on the weighing device.

9. Emptying device (1) according to any one of preceding claims 1 to 8, wherein the isolation device (2) has a viewing window through which the use can monitor the inner space (23) and the container connection device (3) is arranged obliquely in such a way that when the container is connected the user can see an inner space (23) of the container through the viewing window and see completely through the inner space (23).

## Revendications

1. Dispositif de vidange (1) servant à vider un contenant qui contient un produit, en particulier un fût (F), lequel présente :
un dispositif d'isolation (2), qui définit un espace intérieur (23) et autorise des activités d'un utilisateur dans l'espace intérieur (23) sans risque de contamination de l'utilisateur, dans lequel le dispositif d'isolation est un isolateur avec des manchons gantés, par l'intermédiaire desquels l'utilisateur peut effectuer des activités dans l'espace intérieur ;
un dispositif de raccordement de contenant (3) servant à raccorder de manière étanche le contenant au dispositif d'isolation (2), de telle manière qu'il n'existe aucun risque de contamination de l'utilisateur par le produit ; et
un conduit de transport (14) disposé dans l'espace intérieur (23), qui peut être déplacé pour vider le contenant de telle manière qu'une extrémité de transport (43) du conduit de transport (4) se trouve dans le contenant lorsqu'un contenant est raccordé,
**caractérisé en ce que**
le conduit de transport (14) est fixé, par une extrémité de raccordement, à un raccord de conduit (51) disposé dans l'espace intérieur (23) servant à évacuer le produit hors du dispositif d'isolation (2), dans lequel
le conduit de transport est formé d'un tuyau de transport (41) flexible qui est fixé au raccord de conduit, dans lequel le raccord de conduit est relié en vue de l'évacuation du produit à un raccord extérieur (52) du dispositif de vidange, auquel un dispositif de transport pneumatique est raccordé ;
le conduit de transport (4) est maintenu dans l'espace intérieur (23) au niveau d'une suspension, qui autorise le déplacement de l'extrémité de transport (43) dans le contenant et qui maintient le conduit de transport (4) pendant le déplacement du conduit de transport (4) ;
la suspension présente un rail de guidage et un chariot (61) pouvant être déplacé sur le rail de guidage, et le conduit de transport (4) est fixé au chariot de telle manière que du fait du déplacement du chariot, l'extrémité de transport (43) est déplacée soit dans ou en dehors du contenant.

2. Dispositif de vidange (1) selon la revendication 1, dans lequel l'extrémité de transport (43) du conduit de transport (4) est formée par un tube d'aspiration (42) ou un tube d'aspiration télescopique, qui est fixé au raccord de conduit (51) par l'intermédiaire du tuyau flexible de transport (41).

3. Dispositif de vidange (1) selon la revendication 1 ou 2, dans lequel le rail de guidage est rectiligne.

4. Dispositif de vidange (1) selon l'une quelconque des revendications 1 à 3, dans lequel le conduit de transport (4) peut être déplacé par un moteur.

5. Dispositif de vidange (1) selon la revendication 4, dans lequel le moteur est prévu au niveau du chariot, qui peut être actionné pour déplacer le chariot.

6. Dispositif de vidange (1) selon l'une quelconque des revendications 2 à 5, dans lequel le tuyau de transport (41) est fixé par une extrémité correspondant à l'extrémité de raccordement, au raccord de conduit (51) et par une autre extrémité au chariot (61) ; et
le tube d'aspiration ou le tube d'aspiration télescopique est fixé au chariot et/ou au tuyau de transport par l'intermédiaire d'un tuyau de liaison (44), qui est plus flexible que le tuyau de transport.

7. Dispositif de vidange (1) selon l'une quelconque des revendications 1 à 6, dans lequel la suspension est configurée de telle manière qu'elle ramène l'extrémité de transport (43) à une position de départ quand aucune force n'est exercée sur le conduit de transport (4).

8. Dispositif de vidange (1) selon l'une quelconque des revendications 1 à 7, dans lequel le dispositif de vidange (1) présente un dispositif de pesage servant à définir le poids du produit, dans lequel le dispositif de pesage est disposé de telle manière que dans le cas d'une utilisation du dispositif de vidange (1) conforme à l'usage prévu, le dispositif d'isolation (2) et le contenant et de préférence également l'utilisateur se trouvent sur le dispositif de pesage.

9. Dispositif de vidange (1) selon l'une quelconque des revendications 1 à 8, dans lequel le dispositif d'isolation (2) présente une fenêtre d'inspection, par laquelle l'utilisateur peut apercevoir l'espace intérieur (23) et le dispositif de raccordement de contenant (3) est disposé de manière oblique, de telle manière que, lorsque le contenant est raccordé, l'utilisateur peut voir à l'intérieur d'un espace intérieur (23) du contenant par la fenêtre d'inspection et à travers la totalité de l'espace intérieur (23).
